Europäisches Patentamt

European Patent Office

Office européen des brevets

(19)

(11) Numéro de publication : **0 305 271 B1**

(12) # FASCICULE DE BREVET EUROPEEN

(45) Date de publication du fascicule du brevet :
02.10.91 Bulletin 91/40

(51) Int. Cl.⁵ : **G01K 1/16**

(21) Numéro de dépôt : **88402105.6**

(22) Date de dépôt : **12.08.88**

(54) **Capteur pour la mesure de la température interne d'une cuve de centrifugeur réfrigérée ou thermostatée.**

(30) Priorité : **18.08.87 FR 8711674**

(43) Date de publication de la demande :
**01.03.89 Bulletin 89/09**

(45) Mention de la délivrance du brevet :
**02.10.91 Bulletin 91/40**

(84) Etats contractants désignés :
**CH DE FR GB IT LI**

(56) Documents cités :
**DE-A- 1 473 254**
**FR-A- 2 235 361**
**US-A- 3 751 305**

(73) Titulaire : **JOUAN, Société Anonyme dite**
**Zone Industrielle de Brais**
**F-44600 Saint Nazaire (FR)**

(72) Inventeur : **Fondin, Jean-Louis**
**15, rue Guillaume Apollinaire**
**F-44600 Saint-Nazaire (FR)**

(74) Mandataire : **Jolly, Jean-Pierre et al**
**Cabinet Jolly 54, rue de Clichy**
**F-75009 Paris (FR)**

EP 0 305 271 B1

## Description

Un centrifugeur est généralement constitué par un caisson métallique à double parois calorifugées comprenant une cuve de forme concave et un blindage extérieur. Le fond de la cuve est traversé de façon étanche par un arbre de moteur qui porte à son extrémité intérieure un portoir sur lequel sont articulées des nacelles destinées à recevoir des tubes ou récipients contenant des échantillons de produits à centrifuger.

Au repos, les nacelles pendent vers le bas tandis que sous l'action de la force centrifuge, elles se placent dans un plan horizontal. La rotation à grande vitesse permet ainsi aux échantillons de subir une accélération s'élevant jusqu'à plusieurs milliers de fois l'accélération de la pensanteur, et de séparer les différents composants de l'échantillon par différence de densité.

Pour des raisons de sécurité, la cuve de centrifugeur est maintenue close par une porte plus ou moins étanche. Mais alors l'énergie libérée lors de la rotation ne peut que très difficilement être évacuée vers l'extérieur. Lorsqu'on utilise de tels centrifugeurs pour la séparation d'échantillons biologiques, qui comme on le sait, ne supportent pas d'élévation excessive de la température, il est impératif de réguler la température de la cuve à une valeur prédéterminée qui est généralement de l'ordre de 4°C.

La régulation de température est réalisée au moyen d'un système qui comprend un groupe de réfrigération classique dont l'évaporateur de kéon est constitué par un serpentin intimement en contact avec la paroi de la cuve, un capteur de température placé à l'intérieur de la cuve pour obtenir un point de mesure locale et une électronique de régulation qui prend en compte la température de consigne imposée par l'utilisateur et la température réelle de la cuve, et qui génère un ordre d'arrêt ou de marche au compresseur du groupe de froid, suivant la valeur de l'écart entre ces deux températures.

Toutefois, un tel dispositif pose plusieurs problèmes techniques :
— on ne sait pas, dans l'état actuel de la technique, réguler la température des échantillons en cours de centrifugation. Une sonde de température placée soit sur la surface de la cuve, soit dans l'air, ne permet pas d'assurer une température constante dans les nacelles à l'arrêt et pendant la centrifugation.
— le comportement thermodynamique du système dépend du régime de vitesse du rotor.
— lorsque le rotor est à l'arrêt (avant ou après la centrifugation), le modèle thermodynamique est totalement différent de celui qui existe en cours de rotation.
— l'inertie de la transmission de la chaleur depuis la paroi réfrigérée de la cuve jusqu'aux échantillons est très importante. Il en résulte que lors des phases qui précèdent ou qui suivent la centrifugation, il peut se produire un gel des échantillons contenus dans les nacelles puisque les frigories accumulées dans les masses métalliques de la cuve et du blindage continuent à se libérer. Ainsi la température que l'on mesure en un point intérieur de la cuve ou sur la surface de celle-ci n'est plus exacte lorsque les conditions changent. En d'autres termes, la température affichée par le système de régulation n'est pas représentative de celle qui règne réellement dans les nacelles.

On connaît par ailleurs par le brevet FR A 2235361 un dispositif de ce type mais qui ne mesure que la température de l'air en mouvement par un ventilateur. Mais cette indication est imprécise.

La présente invention a pour but de remédier aux inconvénients susmentionnés, et à cet effet, elle a pour objet un capteur de température qui se caractérise en ce qu'il est constitué par une pièce métallique qui comprend une bride destinée à être fixée en contact intime sur la paroi interne de la cuve et un portion évasée faisant saillie à l'intérieur de la cuve et ayant une surface latérale supérieure à la surface de contact entre la bride et la cuve, ladite pièce présentant un alésage borgne à l'intérieur duquel est logée une sonde de température maintenue en contact avec la paroi de la pièce métallique.

Selon un mode de réalisation particulier de l'invention, le capteur est en forme de champignon et comprend un pied tubulaire se terminant à une extrémité par ladite portion évasée et à l'autre extrémité par une portion filetée, au-dessus de laquelle est formée une bride annulaire, ladite portion filetée étant introduite de l'intérieur de la cuve dans un perçage de celle-ci et recevant à son extrémité un écrou destiné à exercer un serrage énergique de la bride contre la paroi de la cuve.

La sonde de température est en contact avec ladite portion évasée et est noyée dans un polymère qui assure l'étanchéité par rapport à l'extérieur et un bon contact thermique avec la paroi évasée.

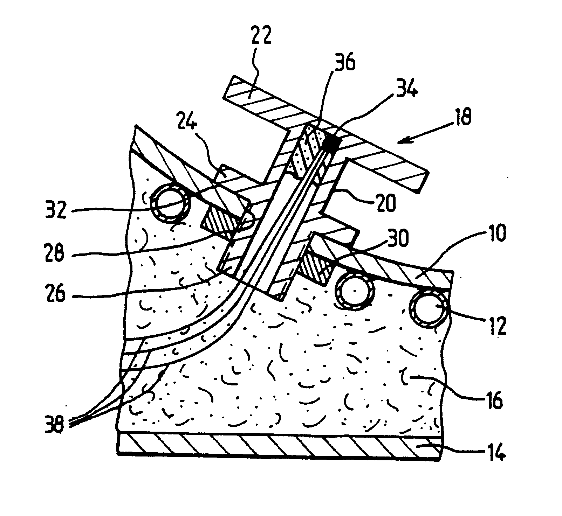

La structure et le fonctionnement du capteur selon l'invention seront mieux compris à la lecture de la description d'un mode de réalisation, en regard de l'unique figure annexée qui représente une vue en coupe partielle d'une cuve de centrifugeur équipée du capteur.

Les centrifugeurs étant bien connus dans la technique, on n'a représenté sur la figure que la partie du centrifugeur qui est voisine du capteur. On distingue la cuve métallique 10, réfrigérée par un serpentin 12 dans lequel circule le fluide réfrigérant, le blindage 14 et la matière thermiquement isolante 16 qui emplit l'espace compris entre la cuve et le blindage.

Le capteur 18 est constitué par un pièce métallique monobloc en forme de champignon qui comprend un pied tubulaire 20 se terminant à une extrémité par une portion évasée 22 en forme de disque. La pièce métallique peut avoir toute autre forme, la seule condition à satisfaire étant que la surface latérale de sa partie évasée soit importante afin de favoriser un échange de chaleur avec l'air contenu dans la cuve. L'alésage du pied 20 est fermé du côté de la portion évasée.

Le pied est pourvu d'une bride annulaire 24 et se termine au-delà de la bride par une portion filetée 26. Celle-ci engagée depuis l'intérieur de la cuve 10 dans un perçage 28 formé dans la cuve et reçoit un écrou 30 destiné à serrer énergiquement la face inférieure de la bride contre la paroi de la cuve afin d'assurer un contact intime entre ces deux surfaces.

A l'intérieur du capteur est logée une sonde de température 34 maintenue en contact avec la paroi de la partie évasée 22, ou en liaison thermique avec ladite paroi au moyen d'un polymère 36 qui assure en même temps l'étanchéité de la sonde par rapport au milieu extérieur. Les fils de mesure 38 de la sonde sortent par l'ouverture de la portion filetée et sont reliés à un dispositif de régulation, non représenté, qui engendre un signal commandant l'arrêt ou la marche du compresseur du groupe froid. Ce signal est obtenu par différence entre la température détectée par la sonde et une température de consigne affichée par l'utilisateur.

On décrira à présent le principe de fonctionnement du capteur. La température détectée par la sonde résulte de deux influences : la chaleur qui lui est communiquée par conduction par la paroi de la cuve 10 et celle qu'elle reçoit par convection de l'air se trouvant à l'intérieur de la cuve.

Lorsque l'équipage tournant du centrifugeur est à l'arrêt, c'est la première influence qui est prépondérante. La mesure de la température s'effectue de façon privilégiée sur la paroi de la cuve grâce au contact selon la surface 32. L'inertie thermique de la mesure sur la cuve est très faible, de sorte que très rapidement la sonde 34 est portée à la température de la cuve. On évite ainsi un trop grand refroidissement de la cuve pendant les phases d'arrêt, avant ou après la centrifugation, et les détériorations qui pourraient en résulter pour les échantillons.

Pendant la rotation de l'équipage mobile, la vitesse linéaire de l'aire par rapport à la cuve est très importante (jusqu'à quelques centaines de mètres par seconde). Les surfaces latérales de la partie évasée 22 et du pied du capteur atteignent rapidement une température d'équilibre sensiblement égale à celle de l'air. Ladite surface 22 étant beaucoup plus grande que la surface 32 qui est en contact avec la cuve, l'influence de celle-ci est secondaire par rapport à la première. Il en résulte que la température mesurée est très voisine de la température de l'air. De même, la température des nacelles est sensiblement celle du flux d'air qui les baigne. Ainsi, après un court intervalle de temps, un équilibre est atteint entre la température des échantillons contenus dans les nacelles et celle de l'air. La température qui est alors mesurée par le capteur représente une bonne image de celle des échantillons en cours de centrifugation. La régulation de température maintiendra donc la température des échantillons constante et égale à la valeur de consigne.

En résumé, que l'équipage rotatif soit à l'arrêt ou en mouvement, le capteur se met rapidement en équilibre avec la température de la surface dont l'influence est prépondérante. On évite donc une baisse excessive de la température des échantillons pendant les phase d'arrêt, avant ou après la centrifugation, grâce à la mesure par conduction depuis la cuve. Cette mesure permet d'anticiper sur le temps de transmission des frigories entre le serpentin de réfrigération et la température de l'air. De plus, lors des phases de centrifugation, on obtient une température des échantillons la plus proche possible de la valeur de consigne, grâce à la mesure par convection.

Il va de soi que l'invention s'applique également aux centrifugeurs thermostatés.

## Revendications

1. Capteur pour la mesure de la température interne d'une cuve (10) de centrifugeur réfrigérée ou thermostatée, caractérisé en ce qu'il est constitué par une pièce métallique (18) qui comprend une bride (24) destinée à être fixée en contact intime sur la paroi interne de la cuve (10) et une portion évasée (22) faisant saillie à l'intérieur de la cuve (10) et ayant une surface latérale supérieure à la surface de contact (32) entre la bride (24) et la cuve (10), ladite pièce (18) présentant un alésage (26) borgne à l'intérieur duquel est logée une sonde de température (34) maintenue en liaison thermique avec la paroi de la pièce métallique (18).

2. Capteur de température selon la revendication 1, caractérisé en ce qu'il est en forme de champignon et comprend un pied tubulaire (20) se terminant à une extrémité par ladite portion évasée (22) et à l'autre extrémité par une portion filetée (26), au-dessus de laquelle est formée une bride annulaire (24), ladite portion filetée (26) étant introduite de l'intérieur de la cuve (10) dans un perçage (28) de celle-ci et recevant à son extrémité un écrou soudé (30) sur la paroi de la cuve (10).

3. Capteur de température selon la revendication 2, caractérisé en ce que la sonde de température (34) est en liaison thermique avec ladite portion évasée (22) et est noyée dans un polymère (36) qui assure l'étanchéité par rapport à l'extérieur et un bon contact thermique avec la portion évasée (22).

4. Capteur de température selon la revendication 1, caractérisé en ce que la sonde (34) est en contact avec la paroi de la portion évasée (22).

## Patentansprüche

1. Aufnehmer zur Messung der Innentemperatur eines Gefäßes (10) einer gekühlten oder mit einem Thermostat versehenen Zentrifuge, gekennzeichnet durch ein metallisches Teil (18), welches eines Flansch (24) aufweist, der in innigem Kontakt mit der Innenseite der Wandung des Gefäßes (10) gehalten ist und welches ferner ein aufgeweitetes Teil (22) aufweist, welches aus der Innenseite des Gefäßes (10) herausragt und eine seitliche Oberfläche aufweist, die größer bemessen ist als die Berührungsfläche (32) zwischen dem Flansch (24) und dem Gefäß (10), wobei das genannte Teil (18) eine Blindbohrung (26) aufweist, innerhalb welcher ein Temperaturfühler (34) aufgenommen ist, der mit der Wandung des metallischen Teils (18) in thermischer Verbindung gehalten ist.

2. Temperaturaufnehmer nach Anspruch 1, gekennzeichnet durch eine pilzartige Gestalt, die ein rohrartiges Fußteil (20) aufweist, welches an seinem einen Ende in dem genannten aufgeweiteten Teil (22) endet und dessen anderes Ende durch einen Gewindeabschnitt (26) gebildet wird, oberhalb welchem sich ein Ringflansch (24) befindet, wobei der Gewindeabschnitt (26) vom Innenraum das Gefäßes (10) her in eine Bohrung (28) desselben eingesetzt ist und auf seinem Ende eine mit der Wandung des Gefäßes (10) verschweißte Mutter (30) trägt.

3. Temperaturaufnehmer nach Anspruch 2, dadurch gekennzeichnet, daß der Temperaturfühler (31) mit dem genannten aufgeweiteten Teil (22) in thermischer Verbindung steht und in einen polymeren Werkstoff (36) eingebunden ist, durch der hinsichtlich des Außenraumes die Dichtheit und durch den hinsichtlich des aufgeweiteten Teils (22) ein guter thermischer Kontakt gewährleistet ist.

4. Temperaturaufnehmer nach Anspruch 1, dadurch gekennzeichnet, daß der Temperaturfühler (34) mit der Wandung des aufgeweiteten Teils (22) in Berührung steht.

## Claims

1. Sensor for measuring the internal temperature of a refrigerated or themostatted centrifuge vessel (10), characterised in that it consists of a metal piece (18) which comprises a flange (24) intended to be fixed in intimate contact to the internal wall of the vessel (10) and a widened portion (22) projecting inside the vessel (10) and having a lateral surface which is greater than the contact surface (32) between the flange (24) and the vessel (10), the said piece (18) having a blind bore (26) inside which is housed a temperature probe (34) maintained thermally connected to the wall of the metal piece (18).

2. Temperature sensor according to Claim 1, characterised in that it has the shape of a mushroom and comprises a tubular foot (20) ending, at one end, in the said widened portion (22) and, at the other end, in a threaded portion (26), above which is formed an annular flange (24), the said threaded portion (26) being inserted from inside the vessel (10) in a hole (28) in the latter and receiving, at its end, a nut (30) welded to the wall of the vessel (10).

3. Temperature sensor according to Claim 2, characterised in that the temperature probe (34) is thermally connected to the said widened portion (22) and is embedded in a polymer (36) which forms a hermetic seal relative to the outside and a good thermal contact with the widened portion (22).

4. Temperature sensor according to Claim 1, characterised in that the probe (34) is in contact with the wall of the widened portion (22).